Europäisches Patentamt

(19) European Patent Office

Office européen des brevets

(11) Numéro de publication : **0 176 373**
**B1**

(12) **FASCICULE DE BREVET EUROPÉEN**

(45) Date de publication du fascicule du brevet :
**21.12.88**

(21) Numéro de dépôt : **85401482.6**

(22) Date de dépôt : **18.07.85**

(51) Int. Cl.⁴ : **C 25 C  1/00,** B 01 D 13/00,
**C 25 C  7/00**

(54) **Procédé de traitement d'eaux et d'effluents par ultrafiltration et électrolyse et appareil pour sa mise en oeuvre.**

(30) Priorité : **19.07.84 FR 8411449**

(43) Date de publication de la demande :
**02.04.86 Bulletin 86/14**

(45) Mention de la délivrance du brevet : -
**21.12.88 Bulletin 88/51**

(84) Etats contractants désignés :
**AT BE CH DE FR GB IT LI LU NL SE**

(56) Documents cités :
**EP—A— 0 028 837**
**FR—A— 2 533 233**
**GB—A— 2 009 789**
**US—A— 3 784 460**
**US—A— 4 043 896**

(73) Titulaire : **UNIVERSITE DES SCIENCES ET TECHNI-
QUES DU LANGUEDOC (Montpellier I)**
**Place Eugène Bataillon**
**F-34060 Montpellier (FR)**

(72) Inventeur : **Rumeau, Michel**
**Le Souquet Cité des Pins Avenue Emile Diacon**
**F-34100 Montpellier (FR)**
Inventeur : **Mangeolle, Jean-Paul**
**22, rue de Constantine**
**F-95400 Arnouville (FR)**

(74) Mandataire : **Bruder, Michel**
**10 rue de la Pépinière**
**F-75008 Paris (FR)**

Jouve, 18, rue St-Denis, 75001 Paris, France

### Description

La présente invention concerne un procédé de traitement d'eaux et d'effluents par ultrafiltration et électrolyse, applicable notamment à la récupération et à la séparation de cations métalliques en continu à partir de solutions diluées de leurs sels ou à l'adoucissement des eaux, ainsi qu'un appareil pour sa mise en œuvre.

On connaît déjà, ainsi qu'il est décrit dans la demande de brevet français 2.533.233 un procédé de récupération de cations métalliques, à partir de solutions diluées de leurs sels, procédé dans lequel on soumet la solution de récupération, dans laquelle le métal a été préalablement transformé en sel complexe de poids moléculaire élevé, à une première étape de fractionnement sur une membrane semi-perméable dont le seuil de coupure est inférieur à la taille moléculaire de celle du sel métallique complexé, puis à une deuxième étape d'électrolyse à circulation de la solution concentrée ainsi obtenue, étape au cours de laquelle on récupère le métal, le complexant étant ensuite réintroduit dans le circuit. Pour la mise en œuvre de ce procédé on utilise deux modules l'un d'ultrafiltration, l'autre d'électrolyse, ces deux modules étant placés en série dans une boucle à circulation rapide. Cette boucle comprend, après le module d'électrolyse, un bac de rétention qui permet l'évacuation de l'oxygène formé à l'anode, oxygène qui pourrait oxyder le complexant utilisé pour le procédé. Ce bac qui se trouve à la pression atmosphérique, oblige par conséquent l'utilisateur à remonter continuellement la boucle en pression, pour assurer l'ultrafiltration. Ce procédé entraîne donc une grande dépense d'énergie et un coût de fonctionnement important. Par ailleurs, du fait que l'anode du module d'électrolyse n'est pas séparée de la solution à traiter, le complexant peut venir s'y oxyder.

La présente invention vise à remédier à ces inconvénients en procurant un procédé et un appareil considérablement simplifiés.

A cet effet ce procédé de traitement d'eau et d'effluents par ultrafiltration et électrolyse, applicable notamment à la récupération et à la séparation en continu de cations métalliques à partir de solutions diluées de leurs sels ou à l'adoucissement des eaux est caractérisé en ce qu'on réalise les opérations d'ultrafiltration et d'électrolyse dans une seule et même cellule qui est séparée, par une membrane d'ultrafiltration semi-perméable dont le seuil de coupure est inférieur à la taille moléculaire de celle du sel métallique complexé présent dans la solution de récupération à traiter, en deux compartiments cathodique et anodique, l'eau ou l'effluent à traiter étant amené à circuler à travers le compartiment cathodique, le long de la membrane, tandis que le perméat est évacué du compartiment anodique.

L'invention a également pour objet un appareil pour la mise en œuvre du procédé précité, comportant, à l'intérieur d'un boîtier, une membrane d'ultrafiltration séparant le boîtier en deux compartiments, caractérisé en ce qu'il comporte en outre une cathode et une anode logées respectivement dans les deux compartiments internes séparés par la membrane d'ultrafiltration semi-perméable dont le seuil de coupure est inférieur à la taille moléculaire de celle du sel métallique complexé présent dans la solution de récupération à traiter, le compartiment cathodique étant relié à une arrivée et à une sortie de l'eau ou de l'effluent à traiter, tel qu'une solution de sel métallique complexé, tandis que le compartiment anodique est relié à une sortie du perméat.

L'invention a aussi pour objet des appareils tels que définis aux revendications 3 et 5.

Le procédé et l'appareil suivant l'invention offrent plusieurs avantages. En premier lieu, du fait que la membrane d'ultrafiltration joue à la fois le rôle de diaphragme et de filtre, les espèces chimiques qui se forment à l'anode, notamment l'oxygène, ne peuvent repasser dans la boucle de circulation de la solution, du fait que la différence de pression entre le concentrat et le perméat est trop élevée. De ce fait l'oxygène formé à l'anode est évacué à l'extérieur avec le perméat et il ne risque plus, par conséquent, d'oxyder le complexant, lorsqu'un tel agent complexant est utilisé pour transformer préalablement le métal présent dans une solution en un sel complexe de poids moléculaire élevé. Par ailleurs l'anode se trouve isolée du milieu à traiter et l'agent complexant, lorsqu'il est présent, ne peut donc venir s'y oxyder. Il n'est plus nécessaire d'utiliser un bac de rétention, pour l'évacuation de l'oxygène et ceci entraîne une réduction sensible des pertes de charge et de la dépense d'énergie exigée pour le fonctionnement de l'appareil.

On décrira ci-après, à titre d'exemples non limitatifs, diverses formes d'exécution de la présente invention, en référence au dessin annexé sur lequel :

La figure 1 est un schéma de principe illustrant le procédé et l'appareil de récupération de cations métalliques suivant l'invention.

La figure 2 est une vue en coupe longitudinale et verticale d'un appareil d'ultrafiltration et d'électrolyse à membranes planes.

La figure 3 est une vue en coupe verticale et axiale d'un appareil d'ultrafiltration et d'électrolyse à membrane tubulaire.

La figure 4 est une vue en perspective d'une cathode pouvant être utilisée dans l'appareil de la figure 3.

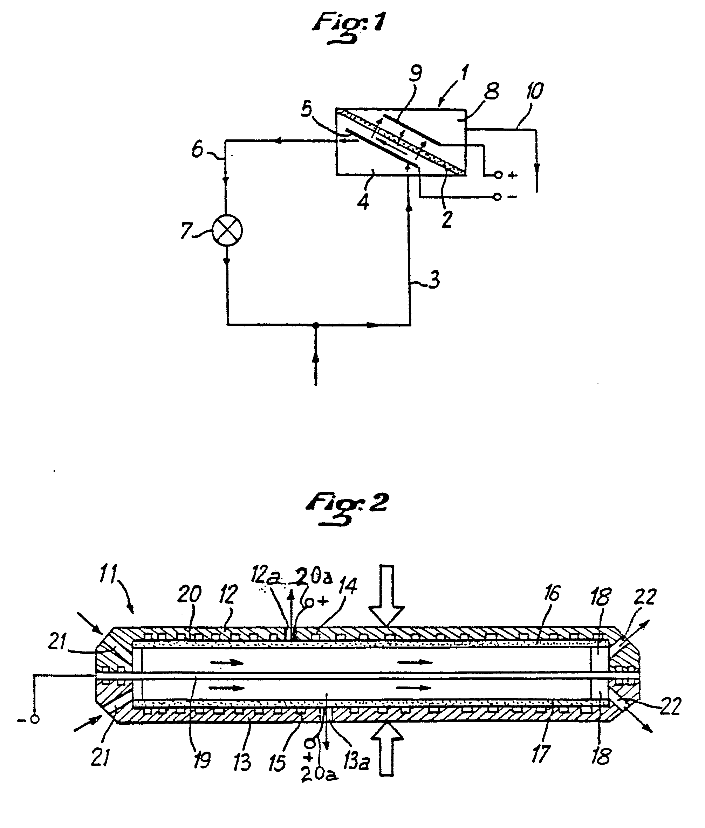

L'appareil suivant l'invention dont le schéma de principe est représenté sur la figure 1 comprend essentiellement une cellule d'ultrafiltration et d'électrolyse 1, à l'intérieur de laquelle est logée une membrane semi-perméable 2 dont le seuil de coupure est inférieur à la taille moléculaire de celle du sel métallique complexé présent dans la solution de récupération à traiter. Cette solution est introduite, par une canalisation 3, dans un premier compartiment 4 délimité par la membrane 2 et dans lequel est logée une cathode 5 reliée au pôle négatif d'un générateur de courant continu. Ce compartiment cathodique 4 communique également, par une canalisation 6 de sortie du concentrat, avec une pompe de recirculation 7 réintroduisant le concentrat dans le compartiment cathodique 4. Dans l'autre compartiment 8 délimité par la membrane d'ultrafiltration 2 est logée une anode 9 reliée au pôle positif du générateur de courant continu et ce compartiment anodique 8 communique avec une canalisation 10 d'évacuation du perméat.

Dans la cellule d'ultrafiltration et d'électrolyse 1 la membrane 2 joue à la fois le rôle de diaphragme et de filtre. L'oxygène qui se forme à l'anode 9 ne peut repasser dans la boucle de recirculation constituée par les canalisations 3 et 6 reliées au compartiment cathodique 4 et la pompe 7. Cet oxygène est évacué à l'extérieur, à travers la canalisation 10, avec le perméat et il ne risque. donc pas d'oxyder le complexant se trouvant dans la solution à traiter.

Cette isolation et cette évacuation de l'oxygène formé à l'anode 9 se révèlent particulièrement intéressantes dans le cas de l'électrolyse du cuivre en milieu ammoniacal, étant donné que l'oxygène dissous dans la solution gêne normalement le procédé.

Dans la forme d'exécution non limitative représentée sur la figure 2 l'appareil d'ultrafiltration et d'électrolyse 11 comprend un boîtier externe en deux moitiés 12, 13 symétriques par rapport à un plan, serrées l'une sur l'autre et qui présentent, dans leurs faces internes, des rainures 14, 15 destinées à recueillir le perméat. Sur les faces internes des deux demi-boîtiers 12, 13 qui sont percés d'orifices respectifs 12a, 13a pour la sortie du perméat, sont appliquées respectivement deux membranes d'ultrafiltration 16, 17, ces deux membranes étant maintenues espacées, le long de leurs bords, par des entretoises 18. Par ailleurs l'appareil 11 comporte une plaque de cuivre 19 constituant la cathode, cette plaque 19 s'étendant en travers du volume interne du boîtier, dans le plan de symétrie de celui-ci. Cette plaque de cuivre est maintenue pincée, par ses parties extrêmes, entre les deux demi-boîtiers 12, 13.

Dans l'appareil 11 représenté sur la figure 2 les deux membranes d'ultrafiltration 16, 17 délimitent ainsi entre elles un compartiment cathodique central en travers duquel s'étend la plaque de cuivre 19 constituant la cathode. Dans ce compartiment central, séparé en deux par la plaque de cuivre médiane 19, est introduite, d'un côté du boîtier de l'appareil, à travers des orifices 21, la solution à traiter. Cette solution s'écoule ainsi à travers le compartiment cathodique, de la gauche vers la droite, en direction d'orifices de sortie 22 prévus dans la partie des deux demi-boîtiers 12, 13 qui est opposée à celle dans laquelle sont ménagés les orifices d'entrée 21. Le perméat est, lui, recueilli dans les rainures 14, 15 prévues dans les faces internes des deux demi-boîtiers 12, 13 et il est évacué à l'extérieur par les orifices 12a, 13a.

L'anode 20 est formée sur la face de chacune des membranes 16, 17 qui est opposée au compartiment cathodique central et qui est en appui sur les faces internes rainurées de deux demi-boîtiers 12, 13. Cette anode 20 peut être réalisée en tout corps conducteur de l'électricité : elle peut être constituée, notamment, par une toile de carbone ou un dépôt métallique ou d'oxydes conducteurs en contact intime avec la membrane 16, 17. L'anode 20 est reliée, par des fils conducteurs 20a, au pôle positif d'un générateur de courant continu, ces fils 20a pouvant sortir de l'appareil, par exemple, à travers les orifices 12a, 13a d'évacuation du perméat.

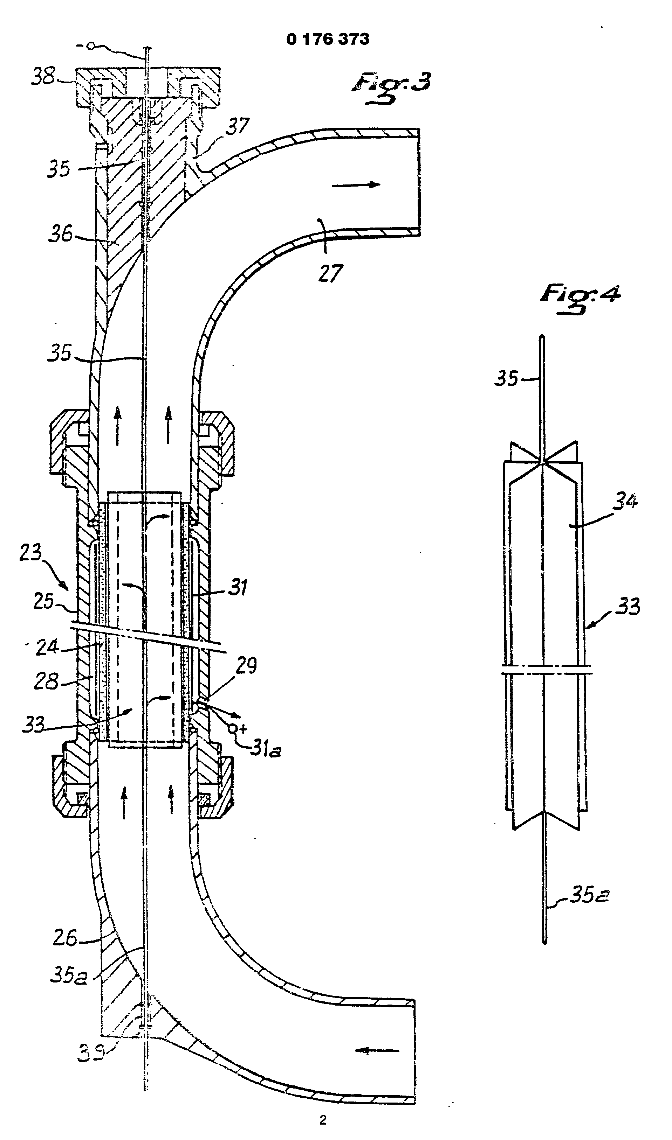

Dans la variante d'exécution illustrée sur les figures 3 et 4 l'appareil d'ultrafiltration et d'électrolyse 23 comprend une membrane d'ultrafiltration tubulaire 24 traversée axialement de part en part par la solution à traiter. Cette membrane tubulaire 24 est logée à l'intérieur d'un manchon vertical 25 aux extrémités inférieure et supérieure duquel sont raccordées respectivement une conduite inférieure 26 d'arrivée de la solution à traiter et une conduite supérieure 27 de départ du concentrat. Les deux conduites inférieure 26 et supérieure 27 sont courbes et elles présentent chacune la forme d'un coude à 90°.

Le manchon externe 25 à l'intérieur duquel est logée la membrane tubulaire 24, présente, sur sa face interne, des rainures longitudinales 28 communiquant avec un orifice 29 d'évacuation du perméat vers l'extérieur. L'anode 31 est formée sur la surface externe de la membrane tubulaire 24. Elle peut être constituée, par exemple, par un dépôt d'oxydes conducteur, une couche métallisée, une toile de carbone, etc. Cette anode 31 peut être également constituée par une bande enroulée autour de la membrane tubulaire 24. Cette anode 31 est reliée, par un fil électrique 31a, au pôle positif d'un générateur de courant électrique continu, ce fil 31a pouvant sortir de l'appareil, par exemple, à travers l'orifice 29 d'évacuation du perméat.

La cathode 33 est logée à l'intérieur de la membrane tubulaire 24. Cette cathode est avantageusement constituée par un ensemble de lames 34 disposées régulièrement autour de l'axe longitudinal, en formant des ailettes radiales. Les ailettes 34 constituant la cathode 33 sont engagées axialement dans la membrane tubulaire 24 et elles sont solidaires, à leurs deux extrémités, de deux tiges axiales 35, 35a. La tige axiale 35 qui s'étend vers le haut, passe à travers un corps 36 qui est logé, d'une manière amovible, dans un manchon vertical 37 solidaire de la paroi de la canalisation supérieure courbe 27. Plus particulièrement ce manchon 27 s'étend coaxialement et tangentiellement par rapport à la partie extrême inférieure de la canalisation supérieure courbe 27 et il permet l'enlèvement, à travers lui, de l'ensemble de la cathode 33, sans qu'il soit nécessaire de vidanger l'appareil. Le corps 36 est maintenu en position dans le manchon 37 par un bouchon vissé 38. La tige supérieure 35 passe à travers le corps 36 et fait saillie à l'extérieur de l'appareil pour être raccordée au pôle négatif du générateur de courant électrique. De la même façon la tige inférieure 35a solidaire de la cathode 33 s'étend vers le bas et elle fait saillie à l'extérieur de la conduite courbe inférieure 26, à travers un perçage 39 ménagé dans la paroi externe de la conduite 26, dans l'axe vertical de l'appareil.

Le procédé et l'appareil suivant l'invention peuvent être appliqués dans d'autres domaines que la récupération et la séparation de cations métalliques. Notamment ils peuvent être appliqués à l'adoucissement d'eau par modification du pH à la cathode et précipitation du carbonate de calcium présent dans l'eau qui est retenu par ultrafiltration, avant la membrane. Le pH est alors réajusté en conséquence dans le compartiment anodique, après la membrane.

## Revendications

1. Procédé de traitement d'eaux et d'effluents par ultrafiltration et électrolyse, applicable notamment à la récupération et à la séparation en continu de cations métalliques à partir de solutions diluées de leurs sels ou à l'adoucissement des eaux, caractérisé en ce qu'on réalise les opérations d'ultrafiltration et d'électrolyse dans une seule et même cellule (1) qui est séparée, par une membrane d'ultrafiltration semi-perméable (2) dont le seuil de coupure est inférieur à la taille moléculaire de celle du sel métallique complexé présent dans la solution de récupération à traiter, en deux compartiments cathodiques (4) et anodique (8), l'eau ou l'effluent étant amené à circuler à travers le compartiment cathodique (4), le long de la membrane (2), tandis que le perméat est évacué du compartiment anodique.

2. Appareil pour la mise en œuvre du procédé suivant la revendication 1, comportant, à l'intérieur d'un boîtier, une membrane d'ultrafiltration séparant le boîtier en deux compartiments, caractérisé en ce qu'il comporte en outre une cathode (5) et une anode (9) logées respectivement dans les deux compartiments internes (4, 8) séparés par la membrane d'ultrafiltration semi-perméable (2) dont le seuil de coupure est inférieur à la taille moléculaire de celle du sel métallique complexé présent dans la solution de récupération à traiter, le compartiment cathodique (4) étant relié à une arrivée (3) et une sortie (6) de l'eau ou de l'effluent à traiter, tel qu'une solution de sel métallique complexé, tandis que le compartiment anodique (8) est relié à une sortie du perméat (10).

3. Appareil pour la mise en œuvre du procédé suivant la revendication 1 caractérisé en ce qu'il comprend un boîtier externe en deux moitiés (12, 13) symétriques par rapport à un plan, serrées l'une sur l'autre et qui présentent, dans leurs faces internes, des rainures (14, 15) destinées à recueillir le perméat, en ce que sur les faces internes des deux demi-boîtiers (12, 13) qui sont percés d'orifices respectifs (12a, 13a) pour la sortie du perméat, sont appliquées respectivement deux membranes d'ultrafiltration (16, 17) dont le seuil de coupure est inférieur à la taille moléculaire de celle du sel métallique complexé présent dans la solution de récupération à traiter, ces deux membranes étant maintenues espacées, le long de leurs bords, par des entretoises (18) et en ce qu'il comporte par ailleurs une plaque de métal conducteur (19) constituant la cathode, cette plaque (19) s'étendant en travers du volume interne du boîtier, dans le plan de symétrie de celui-ci, cette plaque étant maintenue pincée, par ses parties extrêmes, entre les deux demi-boîtiers (12, 13) si bien que les deux membranes d'ultrafiltration (16, 17) délimitent ainsi entre elles un compartiment cathodique central en travers duquel s'étend la plaque (19) constituant la cathode et dans lequel est introduite, d'un côté du boîtier de l'appareil, à travers des orifices (21), la solution à traiter. ·

4. Appareil suivant la revendication 3 caractérisé en ce que l'anode (20) est formée sur la face de chacune des membranes (16, 17) qui est opposée au compartiment cathodique central et qui en appui sur les faces internes rainurées de deux demi-boîtiers (12, 13).

5. Appareil pour la mise en œuvre du procédé suivant la revendication 1 caractérisé en ce qu'il comprend une membrane d'ultrafiltration tubulaire (24) dont le seuil de coupure est inférieur à la taille moléculaire de celle du sel métallique complexé présent dans la solution de récupération à traiter traversée axialement de part en part par la solution à traiter et qui est logée à l'intérieur d'un manchon vertical (25) aux extrémités inférieure et supérieure duquel sont raccordées respectivement une conduite inférieure (26) d'arrivée de la solution à traiter et une conduite supérieure (27) de départ du concentrat, en ce que le manchon externe (25) à l'intérieur duquel est logée la membrane tubulaire (24), présente, sur sa face interne, des rainures longitudinales (28) communiquant avec un orifice (29) d'évacuation du perméat vers l'extérieur, en ce que l'anode (31) est formée sur la surface externe de la membrane tubulaire (24) et la cathode (33) est engagée axialement à l'intérieur de la membrane tubulaire (24).

6. Appareil suivant la revendication 5 caractérisé en ce que la cathode est constituée par un ensemble de lames (34) disposées régulièrement autour de l'axe longitudinal, en formant des ailettes radiales, ces ailettes (34) constituant la cathode (33) sont engagées axialement dans la membrane tubulaire (24) et elles sont solidaires, à leurs deux extrémités, de deux tiges axiales (35, 35a), la tige axiale supérieure (35) passant à travers un corps (36) qui est logé, d'une manière amovible, dans un manchon vertical (37) solidaire de la paroi de la canalisation supérieure courbe (27) et qui s'étend coaxialement et tangentiellement par rapport à la partie extrême inférieure de la canalisation supérieure courbe (27), et faisant saillie à l'extérieur de l'appareil pour être raccordée au pôle négatif du générateur de courant électrique, tandis que la tige inférieure (35a) solidaire de la cathode (33) fait saillie à l'extérieur de la conduite courbe inférieure (26), à travers un perçage (39) ménagé dans la paroi externe de la conduite (26), dans l'axe vertical de l'appareil.

7. Appareil suivant l'une quelconque des revendications 5 et 6 caractérisé en ce que les deux conduites inférieure (26) et supérieure (27) sont courbes et elles présentent chacune la forme d'un coude à 90°.

**Claims**

1. A process for the treatment of water and effluents by ultrafiltration and electrolysis applicable in particular to the continuous recovery and separation of metallic cations from diluted solutions of their salts or to the softening of water, characterized in that the operations of ultrafiltration and of electrolysis are carried out in one and the same cell (1) which is separated by an ultrafiltration semi-permeable membrane of which the cut off threshold is lower than the molecular size of that of the complexed metallic salt present in the recovery solution to be treated into two cathodic (4) and anodic (8) compartments, the water or effluent being circulated through the cathodic compartment (4), along the membrane (2), whilst the permeate is evacuated from the anodic compartment.

2. An apparatus for carrying out the process according to claim 1 comprising within a casing an ultrafiltration membrane separating the casing into two compartments characterized in that it further comprises a cathode (5) and an anode (9) respectively housed in the two inner compartments (4, 8) separated by the ultrafiltration semi-permeable membrane (2) of which the cut off the threshold is lower than the molecular size of that of the complexed metallic salt present in the recovery solution to be treated, the cathodic compartment (4) being connected to an admission (3) and to an evacuation (6) of the water or effluent to be treated, such as a solution of complexed metallic salt, whilst the anodic compartment (8) is connected to an evacuation (10) of the permeate.

3. An apparatus for carrying out the process according to claim 1, characterized in that it comprises an outer casing in two halves (12, 13) symmetrical with respect to a plane, tightened one on the other and which present in their inner faces grooves (14, 15) adapted to collect the permeate in that, on the inner faces of the two half-casings (12, 13) which are pierced with respective orifices (12a, 13a) for evacuation of the permeate, are respectively applied two ultrafiltration membranes (16, 17) of which the cut-off threshold is lower than the molecular size of that of the complexed metallic salt present in the recovery solution to be treated, these two membranes being maintained in spaced apart relationship, along their edges, by spacers (18), and in that it further comprises a plate of conducting metal (19) constituting the cathode, this plate (19) extending across the inner volume of the casing, in the plane of symmetry thereof, this plate being maintained gripped, by its end parts, between the two half-casings (12, 13), so that the two ultrafiltration membranes (16, 17) thus define therebetween a central cathodic compartment across which the plate (19) constituting the cathode extends and in which the solution to be treated is introduced, on one side of the casing of the apparatus, through orifices (21).

4. An apparatus according to claim 3, characterized in that the anode (20) if formed on that face of each of the membranes (16, 17), which is opposite the central cathodic compartment and which is in abutment on the grooved inner faces of two half-casings (12, 13).

5. An apparatus according to claim 2, characterized in that it comprises a tubular ultrafiltration membrane (24) of which the cut-off threshold is lower than the molecular size of that of the complexed metallic salt present in the recovery solution to be treated, completely traversed axially by the solution to be treated and which is housed inside a vertical sleeve (25) at the lower and upper ends of which are respectively connected a lower conduit (26) for admission of the solution to be treated and an upper conduit (27) for evacuation of the concentrate, in that the outer sleeve (25), inside which is housed the tubular membrane (24), presents, on its inner face, longitudinal grooves (28) communicating with an orifice (29) for evacuation of the permeate to the outside, in that the anode (31) is formed on the outer surface of the tubular membrane (24) and the cathode (33) is engaged axially inside the tubular membrane (24).

6. An apparatus according to claim 5, characterized in that the cathode is constituted by an assembly of blades (34) disposed regularly about the longitudinal axis, forming radial fins, these fins (34) constituting the cathode (33) are engaged axially in the tubular membrane (24) and they are fast, at their two ends, with two axial rods (35, 35a), the upper axial rod (35) passing through a body (36) which is removably housed in a vertical sleeve (37) fast with the wall of the upper curved conduit (27) and which extends coaxially and tangentially with respect to the lower end part of the upper curved conduit (27), and projecting outside the apparatus to be connected to the negative pole of the electrical current generator, whilst the lower rod (35a) fast with the cathode (33) projects outside the lower curved conduit (26), through a hole (39) made in the outer wall of the conduit (26), in the vertical axis of the apparatus.

7. An apparatus according to any of claims 5 and 6, characterized in that the two lower and upper conduits (26, 27) are curved and they each present the form of a 90° bend.

**Patentansprüche**

1. Verfahren zur Behandlung von Wasser und Abwasser durch Ultrafiltration und Elektrolyse, anwendbar insbesondere zur kontinuierlichen Wiedergewinnung und Abscheidung von metallischen Kationen aus verdünnten Lösungen ihrer Salze oder zum Weichmachen von Wasser, dadurch gekennzeichnet, daß die Ultrafiltration und die Elektrolyse in ein und derselben Zelle (1) durchgeführt werden, die durch eine semipermeable Ultrafiltrationsmembran (2), deren Durchlaßschwelle niedriger ist als die Molekülgröße des in der zu behandelnden Wiedergewinnungslösung enthaltenen metallischen Komplex-Salzes, in zwei Kammern, nämlich eine Kathoden- (4) und eine Anodenkammer (8), unterteilt wird, wobei das Wasser oder Abwasser einer Zirkulation durch die Kathodenkammer (4) längs der Membran (2) unterworfen wird, während das die Membran durchdringende Material aus der Anodenkammer abgezogen wird.

2. Vorrichtung zur Durchführung des Verfahrens nach Anspruch 1, die im Inneren eines Gehäuses eine das Gehäuse in zwei Kammern unterteilende Ultrafiltrationsmembran aufweist, dadurch gekennzeichnet, daß sie außerdem eine Kathode (5) und eine Anode (9) umfaßt, die jeweils in einer der beiden durch die semipermeable Ultrafiltrationsmembran (2) voneinander getrennten internen Kammern (4, 8) angeordnet sind, wobei die Durchlaßschwelle der Membran (2) niedriger ist als die Molekülgröße des in der zu behandelnden Wiedergewinnungslösung enthaltenen metallischen Komplex-Salzes, und daß die Kathodenkammer (4) mit einem Einlaß (3) und einem Auslaß (6) für das zu behandelnde Wasser oder Abwasser, wie einer Lösung eines metallischen Komplex-Salzes, verbunden ist, während die Anodenkammer (8) mit einem Auslaß (10) für das die Membran durchdringende Material verbunden ist.

3. Vorrichtung zur Durchführung des Verfahrens nach Anspruch 1, dadurch gekennzeichnet, daß sie ein äußeres Gehäuse aus zwei zu einer Ebene symmetrischen Hälften (12, 13) umfaßt, die dicht miteinander verbunden sind und an ihren Innenflächen Nuten (14, 15) zur Aufnahme des die Membran durchdringenden Materials aufweisen, daß auf die von zugeordneten Öffnungen (12a, 13a) zum Abführen dieses Materials durchbrochenen Innenflächen der beiden Gehäusehälften (12, 13) jeweils eine Ultrafiltrationsmembran (16, 17) aufgebracht ist, deren Durchlaßschwelle niedriger ist als die Molekülgröße des metallischen Komplex-Salzes in der zu behandelnden Wiedergewinnungslösung, wobei die beiden Membranen längs ihrer Ränder durch Distanzstücke (18) voneinander getrennt gehalten werden, und daß sie außerdem eine die Kathode bildende, sich in dessen Symmetrieebene durch den Innenraum des Gehäuses erstreckende, leitende Metallplatte (19) umfaßt, die mit ihren Randabschnitten zwischen den beiden Gehäusehälften (12, 13) befestigt ist, derart, daß die beiden Ultrafiltrationsmembranen (16, 17) zwischen sich eine zentrale Kathodenkammer einschließen, durch die sich die die Kathode bildende Platte (19) erstreckt und in die an einer Seite des Gehäuses der Vorrichtung durch Öffnungen (21) die zu behandelnde Lösung eingebracht wird.

4. Vorrichtung nach Anspruch 3, dadurch gekennzeichnet, daß die Anode (20) auf der Seite einer jeden der Membranen (16, 17) ausgebildet ist, die von der zentralen Kathodenkammer abgewandt ist und an der mit Nuten versehenen Innenfläche der beiden Gehäusehälften (12, 13) anliegt.

5. Vorrichtung zur Durchführung des Verfahrens nach Anspruch 1, dadurch gekennzeichnet, daß sie eine rohrförmige Ultrafiltrationsmembran (24) umfaßt, deren Durchlaßschwelle niedriger ist als die Molekülgröße des metallischen Komplex-Salzes in der zu behandelnden Wiedergewinnungslösung und die vollständig von der zu behandelnden Lösung durchquert wird und im Inneren einer vertikalen Hülse (25) angeordnet ist, deren unteres und oberes Ende mit einer unteren Zuflußleitung (26) für die zu behandelnde Lösung bzw. einer oberen Abflußleitung (27) für das Konzentrat versehen sind, daß die äußere Hülse (25), in deren Innerem sich die rohrförmige Membran (24) befindet, auf ihrer Innenfläche mit Längsnuten (28) versehen ist, die mit einer Mündung (29) zum Abziehen des die Membran durchdringenden Materials nach außen in Verbindung stehen, und daß die Anode (31) auf der Außenfläche der rohrförmigen Membran (24) gebildet ist und die Kathode (33) axial in das Innere der rohrförmigen Membran (24) eingreift.

6. Vorrichtung nach Anspruch 5, dadurch gekennzeichnet, daß die Kathode aus einer Anordnung von Lamellen (34) besteht, die regelmäßig um die Längsachse verteilt sind und radiale Flügel bilden, wobei diese die Kathode (33) bildenden Flügel (34) in axialer Richtung mit der rohrförmigen Membran (24) in Eingriff stehen und an ihren beiden Enden mit zwei axialen Stäben (35, 35a) fest verbunden sind, von denen der obere Stab (35) durch einen Körper (36) hindurchtritt, der in herausnehmbarer Weise in einem vertikalen, fest mit der Wandung einer oberen, gekrümmten Leitung (27) verbundenen Stutzen (37) angeordnet ist, und sich koaxial und tangential in Bezug auf den unteren Endabschnitt der oberen, gekrümmten Leitung (27) erstreckt und nach der Außenseite der Vorrichtung vorspringt, um mit dem negativen Pol eines elektrischen Stromgenerators verbunden zu werden, während der fest mit der Kathode (33) verbundene untere Stab (35a) über eine in der Außenwandung einer unteren, gekrümmten Leitung (26) angebrachte Durchbrechung (39) in der Vertikalachse der Vorrichtung nach der Außenseite der unteren Leitung vorspringt.

7. Vorrichtung nach einem der Ansprüche 5 oder 6, dadurch gekennzeichnet, daß die untere Leitung (26) und die obere Leitung (27) gekrümmt sind und jeweils einen Bogen von 90° aufweisen.

*Fig.1*

*Fig.2*

*Fig.3*

*Fig.4*